# EUROPÄISCHE PATENTSCHRIFT

(11) **EP 1 208 544 B1**
(45) Veröffentlichungstag und Bekanntmachung des Hinweises auf die Patenterteilung: **03.03.2004**
(21) Anmeldenummer: 00958365.9
(22) Anmeldetag: 02.08.2000
(51) Int. Cl.: G07F 7/10

(54) **TRAGBARER DATENTRÄGER UND VERFAHREN ZUR NUTZUNG IN EINER MEHRZAHL VON ANWENDUNGEN**
PORTABLE DATA CARRIER AND METHOD FOR USING THE SAME IN A PLURALITY OF APPLICATIONS
SUPPORT DE DONNEES PORTATIF ET PROCEDE D'UTILISATION DANS UNE PLURALITE D'APPLICATIONS

(30) Priorität: 09.08.1999 DE 19937529
(43) Veröffentlichungstag der Anmeldung: 29.05.2002
(73) Patentinhaber: Giesecke & Devrient GmbH, 81677 München (DE)
(72) Erfinder: BÖHLER, Jürgen, D-81827 München (DE)
(74) Vertreter: Klunker . Schmitt-Nilson . Hirsch
(86) Internationale Anmeldenummer: PCT/EP2000/007492
(87) Internationale Veröffentlichungsnummer: WO 2001/011576

(56) Entgegenhaltungen:
- EP-A- 0 152 024
- WO-A-87/07063
- WO-A-92/13322
- FR-A- 2 687 816
- US-A- 5 401 950

## Beschreibung

Die Erfindung geht aus von einem tragbaren Datenträger nach der Gattung des Hauptanspruchs.

Ein solcher ist in der Gestalt einer Chipkarte beispielsweise aus EP 262 025 B1 bekannt. Die Schrift offenbart ein Zugriffssystem zur Gewährung des Zugriffes auf Datenfelder einer IC-Karte für mehrfache Dienste. Jeder Dienst bzw. jede Anwendung besitzt einen spezifischen Authentisierungscode. Auf der IC-Karte ist desweiteren jedem Datenfeld ein Zugriffsinformationsspeicher zugeordnet, der jedem möglichen Authentisierungscode spezielle Zugriffsrechte für das jeweilige Datenfeld zuordnet. Das System arbeitet so, daß jeder Dienst nur auf vorbestimmte Art auf definierte Datenfelder zugreifen kann. Es erfordert allerdings eine unter Umständen aufwendige Pflege der Zugriffsinformationsspeicher. Soll etwa ein neuer Dienst bzw. eine neue Anwendung Zugriff auf bereits vorhandene haben, müssen die Zugriffsinformationsspeicher aller betroffenen Datenfelder geändert werden.

Aus der WO 92/13322 A ist ein tragbarer Datenträger zur Nutzung in einer Mehrzahl von Anwendungen bekannt, welcher eine Speichereinrichtung aufweist, worin sich wenigstens ein Datenfeld befindet, auf das von in einer Anwendungsvorrichtung realisierten Anwendungsapplikationen auf verschiedene Arten zugegriffen werden kann. Dem Datenfeld ist eine Tabelle zugeordnet, die den möglichen Anwendungsapplikationszugriffen jeweils Zugriffsrechte zuordnet. Weiter besitzt der Datenträger eine Zugriffssteuerereinrichtung, die Applikationen, welche einen Zugriff auf ein Datenfeld beabsichtigen, auf ihre Berechtigung prüft. Die Zugriffssteuereinrichtung erlaubt einen beabsichtigten Zugriff, wenn für den von einer Applikation beabsichtigten Zugriff ein entsprechendes Zugriffsrecht in der Tabelle vorliegt. Die Festlegung der Zugriffsrechte erfolgt bei dieser bekannten Lösung stets auf dem tragbaren Datenträger. Eine Einflußnahme auf Seiten der Anwendungsapplikation ist nicht möglich.

Aus der US-A-5, 401,950 ist weiterhin eine Multiapplikationschipkarte bekannt, die einen Zugriff auf eine Applikation in Abhängigkeit von der Präsentation einer durch die Karte geforderten Mehrzahl von verschiedenen Identifizierungscodes gestattet. Die Identifizierungscodes beinhalten jeweils eine konkrete materielle Information. Aus den präsentierten Identifizierungscodes wird eine Metainformation gebildet, aufgrund derer dann die Entscheidung über eine Zugriffserlaubnis getroffen wird. Über die Anzahl der Identifizierungscodes entsteht ein in seiner Stärke skalierbares Zugriffsrecht. Die Anzahl bestimmt zugleich auch die Anzahl der überhaupt möglichen Zugriffsrechte. Soll die Zahl der Zugriffsrechte vergrößert werden, muß entsprechend die Anzahl der Identifizierungscodes erhöht werden.

Der Erfindung liegt die Aufgabe zugrunde, einen tragbaren Datenträger für Mehrfachanwendungen sowie ein Verfahren zur Regelung der Zugriffsmöglichkeiten bezüglich der Mehrfachanwendungen anzugeben, die die Vornahme von Änderungen in der Anwendungsstruktur vereinfachen.

Diese Aufgabe wird gelöst durch einen tragbaren Datenträger mit den Merkmalen des Anspruchs 1 sowie ein Verfahren mit den Merkmalen des unabhängigen Anspruchs 3. Der erfindungsgemäße Datenträger hat den Vorteil, daß er leicht ausbaufähig ist. Ohne weiteres lassen sich neue Anwendungen als Applikationen implementieren und die zugehörigen Datenfelder auf den Datenträger bringen. Ein Eingriff in bereits vorhandene Applikationen bzw. die zugehörigen Datenfelder ist nicht erforderlich. Auch eine genaue Kenntnis der bereits vorhandenen Applikationen bzw. Datenfelder ist nicht notwendig. Dennoch können vorhandene Datenfelder ohne Gefährdung der Sicherheit für unterschiedliche Anwendungen nutzbar gemacht werden. Insbesondere werden unberechtigte Übergriffe zwischen verschiedenen auf einem Datenträger vorhandenen Applikationen verhindert. Alle Änderungen in der Anwendungsstruktur können dabei jederzeit vorgenommen werden. Ein Vorteil des aus Anspruch 3 entnehmbaren Verfahrens besteht auch darin, daß es wenig Speicherplatz benötigt.

Ein Ausführungsbeispiel der Erfindung wird nachfolgend unter Bezugnahme auf die Zeichnung näher erläutert.

Es zeigen:
- Fig. 1: die Struktur eines Datenträgersystems,
- Fig. 2: die Anordnung von Zugriffsinformationen in Anwendungsvorrichtungen und Datenträger,
- Fig. 3: den Ablauf eines Zugriffes einer Applikation auf ein Datenfeld.

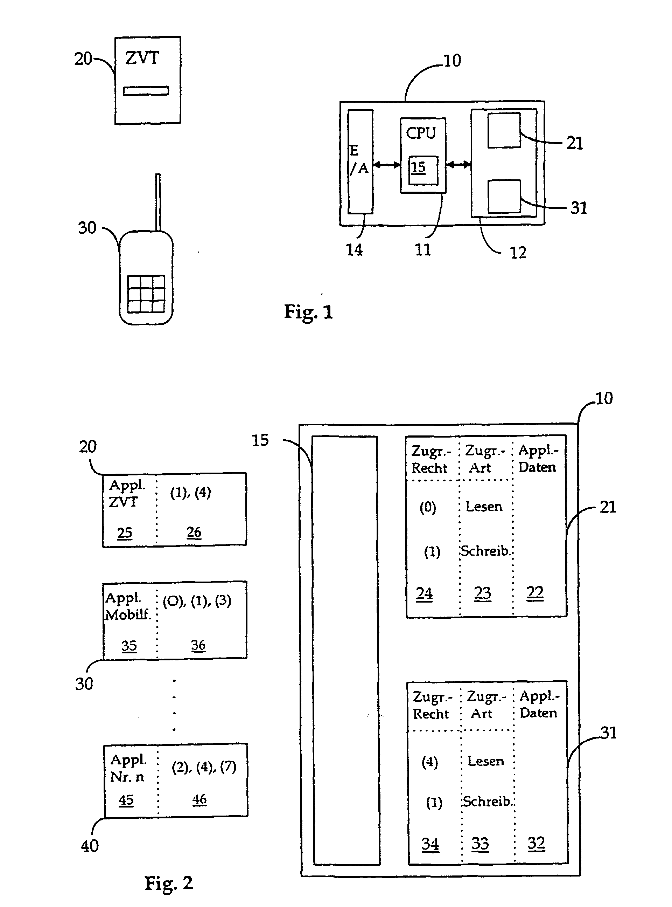

In Fig. 1 bezeichnet die Bezugszahl 10 einen zur Nutzung in einer Mehrzahl von Anwendungen ausgebildeten Datenträger, der in Form einer Chipkarte ausgebildet ist. Auf ihr befinden sich eine zentrale Prozessoreinheit 11 zur Ausführung von Programmcode, welcher jeweils eine Chipkartenfunktion realisiert, eine Speichereinrichtung 12, worin der von der zentralen Prozessoreinheit 11 auszuführende Programmcode abgelegt ist, sowie eine Schnittstelle 14 zum Austausch von Daten mit verschiedene Anwendungen realisierenden Kartenanwendungsvorrichtungen 20, 30. Als Beispiele für mögliche Kartenanwendungsvorrichtungen sind in Fig. 1 ein Zahlungsverkehrsterminal 20 sowie ein Mobilfunkgerät 30 angedeutet. Jede Kartenanwendungsvorrichtung 20, 30 dient zur Realisierung wenigstens einer Applikation, zu der auf der Chipkarte 10 jeweils ein Applikations-Datencode korrespondiert, welcher als separates Datenfeld 21, 31 im Speicher 12 ausgebildet ist. Eine über eine Kartenanwendungsvorrichtung 20, 30 realisierte Applikation kann nur auf Datenfelder 21, 31 zugreifen, für die sie eine Zugriffsberechtigung besitzt.

Die Struktur des eingesetzten Zugriffsberechtigungssystems ist in Fig. 2 veranschaulicht. Die Kartenanwendungsvorrichtungen 20, 30 sind jetzt durch Blöcke repräsentiert. Jede Kartenanwendungsvorrichtung, mithin jeder Block 20, 30, ist mit - nicht weiter gezeigten - signaltechnischen Mitteln ausgestattet, die es ermöglichen, einen Zugriff auf ein Datenfeld 21, 31 im Speicher 12 der Chipkarte 10 einzuleiten. Parallel zu den schon beispielhaft benannten Anwendungen Zahlungsverkehr und Mobilfunk können weitere gleichartige oder verschiedene Kartenanwendungsvorrichtungen angeordnet sein, was durch Block 40 angedeutet ist. Der in jeder Kartenanwendungsvorrichtung 20, 30 vorhandene Datencode umfaßt jeweils einen Teil 35, 45 mit dem Code einer eine Kartenanwendung umsetzenden Applikation, etwa Informationen zu einem Konto im Zusammenhang mit einer Zahlungsverkehrstransaktion oder Authentifizierungsinformationen für ein Mobilrunkgerät; daneben umfaßt er jeweils einen Abschnitt 36, 46 mit Daten, die für die auf der Kartenanwendungsvorrichtung 20, 30 vorhandenen Anwendungsapplikationen einen vorrichtungsseitigen Zugriffsstatus festlegen. Die Zugriffsstatusdaten definieren dabei Zugriffsrechte und Zugriffsarten wie beispielsweise Lesen, Schreiben, usw., die angeben, auf welche Art die Applikationen jeweils auf ein Datenfeld 21, 31 in der Chipkarte 10 zugreifen können. Jede Applikation kann über ein oder mehrere Zugriffsrechte verfügen. In einfacher Weise kann dabei, wie in Fig. 2 angedeutet, jedes Zugriffsrecht durch eine Ziffer symbolisiert sein. Im Beispiel der Fig. 2 sind der Applikation 20 Zugriffsrechte (1) und (4), der Applikation 30 Zugriffsrechte (0), (1) und (3), der Applikation 40 Zugriffsrechte (2), (4) und (7) zugeordnet.

Repräsentativ für die Chipkarte 10 stehen in Fig. 2 eine Zugriffssteuereinrichtung 15 sowie den Kartenanwendungsvorrichtungen 20, 30 zugeordnete Datenfelder 21, 31. Die Zugriffssteuereinrichtung 15 ist dabei eine Teilfunktion der nicht weiter gezeigten zentralen Prozessoreinheit 11, die Datenfelder 21, 31 sind in der Speichereinrichtung 12 realisiert. In Analogie zu den Kartenanwendungsvorrichtungen 20, 30, 40 können in der Speichereinrichtung 12 neben den beiden angedeuteteten weitere Datenfelder vorhanden sein, die der Übersichtlichkeit wegen nicht dargestellt sind.

Korrespondierend zu den Zugriffsrechten der Kartenanwendungsvorrichtungen 20, 30 weisen die auf der Karte angelegten Datenfelder 21, 31 neben den Nutzdaten 22, 32 jeweils noch weitere Abschnitte mit Zugriffsinformationen, 23, 24, 33, 34 auf. Ein erster Abschnitt 23, 33 enthält dabei die in Bezug auf das zugrundeliegende Datenfeld 21, 31 überhaupt möglichen Zugriffsarten, z.B. Schreiben, Lesen usw. Ein zweiter Abschnitt 24, 34 ordnet jeder im ersten Abschnitt enthaltenen Zugriffsart jeweils ein zur Ausführung der Zugriffsart benötigtes Zugriffsrecht zu. Die Angabe des Zugriffsrechtes erfolgt dabei übereinstimmend mit der in den Kartenanwendungsvorrichtungen verwendeten Darstellung. Sie kann in einfacher Weise insbesondere in der Zuordnung von Ziffern zu bestimmten Zugriffsarten bestehen.

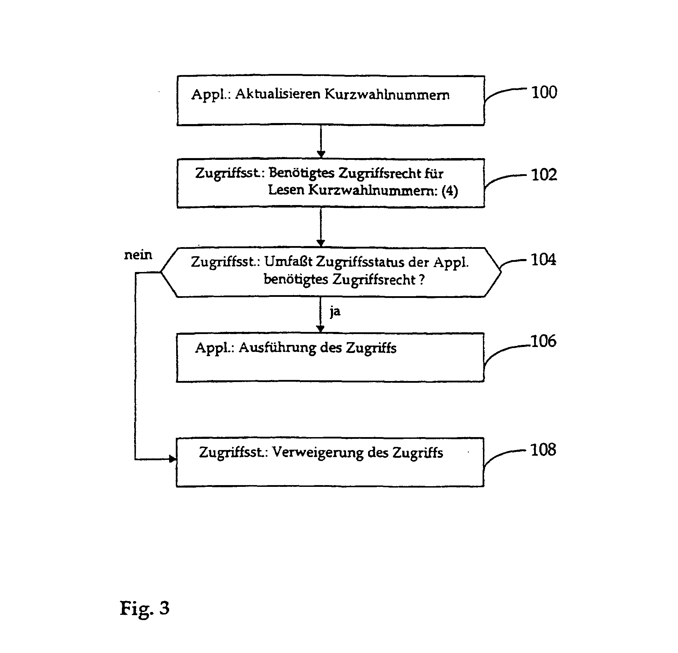

Den Zugriff einer Anwendungsapplikation auf ein Datenfeld 21, 31 vermittelt die Zugriffssteuereinrichtung 15. Fig. 3 veranschaullicht die dabei durchgeführten, grundsätzlichen Verfahrensschritte am Beispiel einer Mobilfunksituation, in der eine über die Luftschnittstelle wirkende Applikation auf den Kurzwahlnummemspeicher einer in einem Mobilfunkgerät eingesetzten Chipkarte zugreift, um etwa die Kurzwahlnummernliste zu aktualisiern, Schritt 100. Erkennt die Zugriffssteuereinrichtung 15, nach einer entsprechenden Initialisierung, daß eine Applikation - im Beispiel in Gestalt einer über die Luftschnittstelle übertragenen Aktualisierungsapplikation-einen Zugriff auf ein kartenseitiges Datenfeld 21, 31 beabsichtigt, bestimmt sie zunächst den Typ des beabsichtigten Zugriffes. Steht fest, auf welche Art der Zugriff - im Beispiel: Zunächst Lesen - erfolgen und auf welches Datenfeld 21, 31 - im Beispiel: den Kurzwahlnummernspeicher -zugegriffen werden soll, ermittelt die Zugriffssteuereinrichtung 15 aus dem Datenfeld 21, 31 mit Hilfe der jeweils entsprechenden Tabelle 23, 24, 33, 34, welches Zugriffsrecht der beabsichtigte Zugriff kartenseitig erfordert, Schritt 102 - die Zugriffsart Lesen erfordere beispielsweise das Zugriffsrecht mit der Nummer (4). Hierauf ermittelt die Zugriffssteuereinrichtung 15, Schritt 104, ob der der Applikation vorrichtungsseitig zugeordnete Zugriffsstatus das benötigte Zugriffsrecht umfaßt - im Beispiel: verfügt die Applikation vorrichtungsseitig zumindest über das Zugriffsrecht Nummer (4) für Lesen. Enthält der für die Applikation ermittelte Zugriffsstatus das benötigte Zugriffsrecht, wird der von der Applikation beabsichtigte Zugriff erlaubt, Schritt 106. Enthält der ermittelte Zugriffsstatus der Applikation das benötigte Zugriffsrecht nicht oder nicht vollständig, wird der beabsichtigte Zugriff verweigert, Schritt 108.

Das vorbeschriebene Zugriffskonzept ist sowohl kartenextern durch Hinzunahme weiterer Kartenanwendungsvorrichtungen wie kartenintern durch Hinzufügung weiterer Datenfelder erweiterbar. Neu auf eine Chipkarte gebrachten Datenfeldern fügt zweckmäßig die Zugriffssteuereinrichtung 15 beim Laden jeweils eine Zufgriffinformationstabelle 23, 24, 33, 34 zu. Da die Zugriffsstatusdaten nicht datenfeldspezifisch sind, können Anwendungsapplikationen die aufgrund ihres vorrichtungsseitigen Zugriffsstatus möglichen Zugriffsarten bezüglich aller datenträgerseitigen Datenfelder 21, 31 vornehmen, die für einen Zugriff ein in dem Zugriffsstatus enthaltenes Zugriffsrecht erfordern.

## Patentansprüche

1. Tragbarer Datenträger zur Nutzung in einer Mehrzahl von Anwendungen mit
einer Speichereinrichtung, worin sich mindestens ein Datenfeld befindet, auf das von wenigstens einer, in einer Kartenanwendungsvorrichtung realisierten Anwendungsapplikation auf mehrere Arten zugegriffen werden kann,
sowie einer Zugriffssteuereinrichtung, die Applikationen, welche einen Zugriff auf ein Datenfeld beabsichtigen, auf ihre Berechtigung dazu prüft,
**dadurch gekennzeichnet, daß**
dem Datenfeld (21, 31) eine Tabelle (23, 24, 33, 34) zugeordnet ist, die den möglichen Zugriffsarten jeweils ein bezugfrei festlegbares Zugriffsrecht zuordnet, und die Zugriffssteuereinrichtung (15) aufweist:
- Mittel, um die Art eines von einer Applikation beabsichtigten Zugriffs auf ein Datenfeld (21, 31) festzustellen,
- Mittel, um aus der Tabelle (23, 24, 33, 34) des Datenfeldes (20, 21), auf das ein Zugriff beabsichtigt ist, ein der festgestellten Zugriffsart zugeordnetes Zugriffsrecht zu entnehmen,
- sowie Mittel, um festzustellen, ob eine Applikation, die einen Zugriff beabsichtigt, über das zugeordnete Zugriffsrecht verfügt.

2. Datenträger nach Anspruch 1, **dadurch gekennzeichnet, daß** zumindest den Zugriffsarten Lesen, Schreiben, Ausblenden, Wiederherstellen jeweils ein eigenes Zugriffsrecht zugeordnet ist.

3. Verfahren zur Regelung des Zugriffs einer in einer Kartenanwendungsvorrichtung realisierten Applikation auf ein Datenfeld eines für eine Mehrzahl von Anwendungen nutzbaren tragbaren Datenträgers, **gekennzeichnet durch** folgende Schritte:
- Zuordnen eines bezugsfrei festlegbaren Zugriffsrechtes zu jeder möglichen Zugriffsart für jedes Datenfeld, und
- im Falle einer Zugriffsabsicht:
- Feststellen der Art des beabsichtigten Zugriffes,
- Bestimmen des der festgestellten Zugriffsart für das betroffene Datenfeld (21,31) zugeordneten Zugriffsrechtes,
- Feststellen, ob die den Zugriff beabsichtigende Applikation über das Zugeordnete Zugriffsrecht verfügt.

4. Verfahren nach Anspruch 3, **dadurch gekennzeichnet, daß** die Zuordnung eines Zugriffsrechtes zu einer Zugriffsart beim Laden eines Datenfeldes (21, 31) auf den Datenträger (10) erfolgt.

5. Verfahren nach Anspruch 3, **dadurch gekennzeichnet, daß** die Zuordnung von Zugriffsrechten zu einer Applikation und zu einem Datenfeld (21, 31) eines Datenträgers (10) unabhängig voneinander erfolgen.

## Claims

1. A portable data carrier for use in a plurality of applications having
a memory device containing at least one data field which can be accessed in several modes by at least one user application realized in a card application device, and
an access control device which checks the authority of applications intending to access a data field,
**characterized in that**
the data field (21, 31) has assigned thereto a table (23, 24, 33, 34) which assigns to each of the possible access modes an access right to be defined without reference, and the access control device (15) has:
- means for ascertaining the mode of an access to a data field (21, 31) intended by an application,
- means for deriving an access right assigned to the ascertained access mode from the table (23, 24, 33, 34) of the data field (20, 21) to which an access is intended, and
- means for ascertaining whether an application intending an access has the assigned access right.

2. A data carrier according to claim 1, **characterized in that** at least the access modes of read, write, mask out, restore have separate access rights assigned to.

3. A method for controlling the access of an application realized in a card application device to a data field of a portable data carrier usable for a plurality of applications, **characterized by** the following steps:
- assigning to each possible access mode for each data field an access right to be defined without reference, and
- in the case of an access intent:
- ascertaining the mode of the intended access,
- determining the access right assigned to the ascertained access mode for the data field (21, 31) concerned,
- ascertaining whether the application intending the access has the assigned access right.

4. A method according to claim 3, **characterized in that** an access right is assigned to an access mode upon loading of a data field (21, 31) onto the data carrier (10).

5. A method according to claim 3, **characterized in that** access rights are assigned to an application and to a data field (21, 31) of a data carrier (10) independently of each other.

## Revendications

1. Support de données portable pour utilisation dans une pluralité d'applications, pourvu:
d'un dispositif de stockage dans lequel se trouve au moins une zone de données accessible selon plusieurs modes par au moins une application d'utilisation mise en oeuvre dans un dispositif d'application à carte,
ainsi qu'un dispositif de contrôle d'accès qui, pour des applications voulant accéder à une zone de données, vérifie leur droit à cette fin,
**caractérisé en ce que**
un tableau (23, 24, 33, 34) est affecté à la zone de données (21, 31) qui affecte à chacun des différents modes d'accès possibles un droit d'accès définissable de façon non relative et le dispositif de contrôle d'accès (15) comprend :
- des moyens pour déterminer le mode selon lequel une application veut accéder à une zone de données (21, 31),
- des moyens pour extraire du tableau (23, 24, 33, 34) de la zone de données (20, 21) à laquelle un accès est voulu, un droit d'accès affecté au mode d'accès déterminé,
- ainsi que des moyens pour déterminer si une application voulant réaliser un accès dispose du droit d'accès affecté.

2. Support de données selon la revendication 1, **caractérisé en ce qu'**au moins un droit d'accès propre est affecté à chacun des modes d'accès: Lire, Ecrire, Masquer, Restaurer.

3. Procédé pour contrôler l'accès par une application mise en oeuvre dans un dispositif d'application à carte, à une zone de données d'un support de données portable utilisable dans une pluralité d'applications, **caractérisé par** les étapes suivantes :
- affecter un droit d'accès définissable de façon non relative à chaque mode d'accès possible pour chaque zone de données, et
- dans le cas où un accès est voulu :
- déterminer le mode d'accès voulu,
- déterminer le droit d'accès affecté au mode d'accès déterminé pour la zone de données concernée,
- vérifier si l'application voulant réaliser l'accès dispose du droit d'accès affecté.

4. Procédé selon la revendication 3, **caractérisé en ce que** l'affectation d'un droit d'accès à un mode d'accès s'effectue lors du chargement d'une zone de données (21, 31) sur le support de données (10).

5. Procédé selon la revendication 3, **caractérisé en ce que** l'affectation de droits d'accès pour une application et pour une zone de données (21, 31) d'un support de données (10) s'effectuent indépendamment l'une de l'autre.
